# FASCICULE DE BREVET EUROPEEN

(11) **EP 1 430 271 B1**
(45) Date de publication et mention de la délivrance du brevet: **29.05.2013**
(21) Numéro de dépôt: 02783219.5
(22) Date de dépôt: 26.09.2002
(51) Int. Cl.: G01B 11/25

(54) **PROCEDE ET DISPOSITIF DE MESURE D'AU MOINS UNE GRANDEUR GEOMETRIQUE D'UNE SURFACE OPTIQUEMENT REFLECHISSANTE**
VERFAHREN UND EINRICHTUNG ZUR MESSUNG MINDESTENS EINER GEOMETRISCHEN GRÖSSE EINER OPTISCH REFLEKTIERENDEN OBERFLÄCHE
METHOD AND DEVICE FOR MEASURING AT LEAST A GEOMETRIC QUANTITY OF AN OPTICALLY REFLECTING SURFACE

(30) Priorité: 26.09.2001 FR 0112618
(43) Date de publication de la demande: 23.06.2004
(73) Titulaire: Holo 3;Association pour le Développement des Méthodes et Techniques Holographiques Optiques et Connexes, 68300 Saint-Louis (FR)
(72) Inventeur: CHAMBARD, Jean-Pierre, F-68120 Pfastatt (FR); CHALVIDAN, Vincent, F-68300 Saint-Louis (FR)
(74) Mandataire: Nithardt, Roland
(86) Numéro de dépôt international: PCT/FR2002/003297
(87) Numéro de publication internationale: WO 2003/036230

(56) Documents cités:
- US-A- 4 645 348
- US-A- 4 742 237
- US-A1- 2001 021 898
- PARKS V J: "Surface curvature analyzed with a grid-reflection technique" EXPERIMENTAL MECHANICS, MARCH 1984, USA, vol. 24, no. 1, pages 44-47, XP008008324 ISSN: 0014-4851

## Description

### Domaine technique :

La présente invention concerne un procédé et un dispositif de mesure d'au moins une grandeur géométrique d'une surface optiquement réfléchissante.

### Technique antérieure :

Il existe différents procédés et dispositifs permettant d'observer la géométrie de surfaces en général.

L'un de ces procédés, particulièrement bien adapté aux applications de l'automobile et de l'aéronautique, consiste à utiliser un dispositif optique comportant une caméra orientée vers la surface à observer, cette caméra reliée à un ordinateur génère une image en niveaux de gris mettant en évidence les variations de courbure de la surface. Les dispositifs de ce type, commercialisés par exemple sous les marques DIFFRACTO®, ONDULE®, sont généralement utilisés pour des surfaces optiquement réfléchissantes et permettent d'effectuer des relevés qualitatifs au moyen d'images en niveaux de gris. Ces dispositifs permettent ainsi de visualiser de faibles variations de pente ou de courbure en utilisant le principe de la réflexion spéculaire, mais ils ne permettent pas d'obtenir de relevés quantitatifs de grandeurs géométriques de ces variations. Il est ainsi impossible de connaître la valeur des pentes ou des courbures des surfaces optiquement réfléchissantes.

D'autres procédés connus permettent de mesurer des grandeurs géométriques de ces surfaces optiquement réfléchissantes.

Un premier procédé consiste à utiliser un palpeur mécanique en mouvement relatif par rapport à la surface optiquement réfléchissante à mesurer. Ce palpeur mécanique est calibré de sorte que l'on puisse faire correspondre à chaque déplacement de son doigt de mesure une ou plusieurs grandeurs géométriques de la surface. Lors de la mesure, le doigt du palpeur mécanique suit généralement une trajectoire prédéterminée pour balayer toute la surface. Il est ainsi possible de mesurer la ou les grandeurs géométriques de la trajectoire suivie selon l'axe du palpeur mécanique. Les inconvénients majeurs de ce procédé sont d'une part le temps nécessaire pour mesurer la surface, d'autre part l'imprécision liée au nombre limité de points de mesure, et enfin les risques de dégradation de l'état de la surface du fait de son contact avec le doigt du palpeur mécanique.

Un second procédé connu utilise les techniques d'interférométrie et consiste à comparer deux ondes issues d'un même laser, l'une réfléchie par la surface à mesurer, l'autre dite référence provenant directement du laser. Ce second procédé est, comme le précédent, bien adapté à la mesure de surfaces de petites dimensions. Cependant, pour la mesure de surfaces de grandes dimensions telles que des miroirs, des pare-brises et autres, ce procédé est particulièrement long et coûteux. De plus, ce procédé ne convient que pour des surfaces réfléchissantes optiquement parfaites ce qui n'est pas le cas par exemple des panneaux de carrosserie de voitures.

Les procédés existants ne permettent donc pas de mesurer rapidement et avec précision de grandes surfaces optiquement réfléchissantes.

### Exposé de l'invention :

La présente invention vise à pallier ces inconvénients en proposant un procédé et un dispositif de mesure d'au moins une grandeur géométrique d'une surface optiquement réfléchissante, rapide, fiable, précis, permettant de quantifier les courbures et/ou les pentes et reliefs de la surface optiquement réfléchissante sans risque de dégradation de la surface mesurée et adapté à la mesure de surfaces optiquement réfléchissantes de grandes dimensions.

Dans ce but, l'invention concerne un procédé tel que défini en préambule au cours duquel on observe à l'aide d'une caméra l'image de la surface à mesurer S optiquement réfléchissante et caractérisé en ce que ce procédé comporte au moins une phase de calibrage et au moins une phase de mesure, en ce que la phase de calibrage est réalisée de manière à permettre l'interprétation de l'image de la surface à mesurer S vue par la caméra lors de la phase de mesure et ainsi de transformer cette image en valeurs quantitatives caractérisant au moins une grandeur géométrique de la surface à mesurer S optiquement réfléchissante.

Pour effectuer les phases de calibrage et de mesure, on définit avantageusement un espace de mesure auquel on associe un repère spatial O, X, Y, Z orthonormé, on dispose dans cet espace de mesure au moins une surface optiquement réfléchissante de référence P, Ci, ou à mesurer S, on dispose la caméra de sorte que son champ de vision couvre l'espace de mesure et on visualise une image associée à un repère plan O', X', Y', on dispose une mire associée à un repère plan O", X", Y" et comportant des points référence M"i de sorte que ses points référence M"i se reflètent sur ladite de référence P, Ci, ou à mesurer S en des points Mi, on observe avec la caméra les points vus M'i image des points référence M"i après réflexion sur la surface de référence P, Ci, ou à mesurer S aux points Mi et on établit une correspondance unique entre les points vus M'i et les points référence M"i.

La phase de calibrage comprend de préférence une étape de calibrage en plan au cours de laquelle on établit une correspondance unique entre les coordonnées x', y' des points vus M'i et les coordonnées x, y des points Mi dont la coordonnée selon l'axe Z est connue.

Selon un premier mode de réalisation, la phase de calibrage comprend une étape de calibrage en courbure pour laquelle on dispose la caméra de sorte que son champ de vision soit rasant par rapport à la surface de référence Ci, on dispose la mire de sorte qu'elle soit située à l'opposée de la caméra par rapport à la surface de référence Ci et on fait la mise au point de la caméra sensiblement au niveau de la surface de référence Ci.

D'une manière particulièrement avantageuse, on utilise comme surface de référence au moins un étalon de courbure Ci ayant au moins une courbure 1/Ri connue selon l'un des axes X, Y, on observe avec la caméra les points vus M'i image des points référence M"i de la mire après réflexion sur l'étalon de courbure Ci aux points Mi et on établit une correspondance unique entre les valeurs mesurées aux points vus M'i ou leurs variations et la courbure 1/Ri de l'étalon de courbure Ci.

Selon une variante de réalisation, la mire comporte un codage d'intensité Ii et/ou de couleur variable d'un point à l'autre de la surface de la mire, cette variation étant définie par une fonction connue selon au moins un axe X", Y" de la mire, on observe avec la caméra les points vus M'i image des points référence M"i de la mire après réflexion sur l'étalon de courbure Ci aux points Mi et on établit une correspondance unique entre l'intensité I'i mesurée et/ou de la couleur mesurée ou leur variation aux points vus M'i et la courbure 1/Ri de l'étalon de courbure Ci.

On déplace de préférence l'étalon de courbure Ci formant la surface de référence en différentes positions de l'espace de mesure et on répète l'observation de l'image vue par la caméra et l'établissement de la correspondance unique en un nombre de points Mi déterminé en fonction de la précision souhaitée pour ladite correspondance unique. On peut ensuite utiliser plusieurs étalons de courbure Ci ayant chacun une courbure 1/Ri différente.

Selon le premier mode de réalisation, pour effectuer la phase de mesure en courbure, on place avantageusement la surface à mesurer S optiquement réfléchissante dans l'espace de mesure, on observe avec la caméra les points vus M'i image des points référence M"i de la mire après réflexion sur la surface à mesurer S aux points Mi et on en déduit la courbure 1/Ri aux points Mi en fonction des lois de correspondance unique issues de la phase de calibrage.

Selon un deuxième mode de réalisation, la phase de calibrage comprend une étape de calibrage en pente pour laquelle on dispose la mire sensiblement en regard de l'espace de mesure et la caméra de sorte que son centre optique soit disposé sensiblement au voisinage de la mire et on utilise comme surface de référence au moins un plan de référence P sensiblement parallèle à la mire et de coordonnée selon l'axe Z connue.

Pour réaliser la phase de calibrage en pente on utilise de préférence comme plan de référence P un miroir sensiblement plan de coordonnées zi selon l'axe Z, on observe avec la caméra les points vus M'i image des points référence M"i après réflexion sur la surface de référence P aux points Mi et on établit la correspondance unique entre les coordonnées x', y' des points vus M'i et les coordonnées x, y des points Mi dont la coordonnée selon l'axe Z est connue.

On déplace avantageusement le miroir formant le plan de référence P parallèlement à lui-même en différentes coordonnées zi de l'espace de mesure et on répète l'observation de l'image vue avec la caméra et l'établissement de la correspondance unique.

Selon une variante de réalisation, la mire comporte un codage d'intensités Iix, Iiy et/ou de couleurs variables d'un point à l'autre de sa surface, ces variations étant définies par des fonctions connues selon respectivement les axes X" et Y" de la mire, on observe avec la caméra les points vus M'i image des points référence M"i après réflexion sur le miroir aux points Mi et on établit les correspondances uniques entre d'une part les intensité l'ix, I'iy mesurées et/ou de couleurs mesurées ou leurs variations aux points vus M'i et la coordonnée zi du plan de référence P et d'autre part les coordonnées xi, yi du point Mi.

Selon le deuxième mode de réalisation, pour effectuer la phase de mesure en pente, on place la surface à mesurer S optiquement réfléchissante dans l'espace de mesure, on observe avec la caméra les points vus M'i image des points référence M"i de la mire après réflexion sur la surface à mesurer S aux points Mi, on en déduit les coordonnées xi, yi, zi aux points Mi en fonction des lois de correspondance unique issues de la phase de calibrage et on en déduit les pentes Pix, Piy respectivement selon les axes X et Y entre deux points Mi voisins.

L'invention concerne également un dispositif pour la mise en oeuvre du procédé de mesure d'au moins une grandeur géométrique d'une surface à mesurer S optiquement réfléchissante tel que défini en préambule, caractérisé en ce qu'il comprend au moins un espace de mesure dans lequel on place au moins une surface de référence P, Ci, ou à mesurer S, au moins une surface de référence P, Ci agencée pour calibrer ledit dispositif, au moins une mire positionnée pour se refléter sur ladite surface de référence P, Ci, ou à mesurer S, au moins une caméra positionnée pour que son champ de vision couvre l'espace de mesure et voit l'image de la mire sur ladite surface de référence P, Ci, ou à mesurer S, la caméra étant associée à une unité informatique agencée pour interpréter l'image de la surface à mesurer S vue par la caméra et en déduire des valeurs quantitatives caractérisant au moins une grandeur géométrique de la surface à mesurer S en fonction d'au moins une surface de référence P, Ci.

### Description sommaire des dessins :

La présente invention et ses avantages apparaîtront mieux dans la description suivante d'exemples de réalisation, en référence aux dessins annexés, dans lesquels :
- la figure 1 représente schématiquement le dispositif de mesure selon invention dans un repère spatial O, X, Y, Z orthonormé,
- la figure 2 représente schématiquement la configuration du dispositif de mesure pour effectuer la phase de calibrage en courbure,
- la figure 3 représente une variante de réalisation d'une mire utilisée pour effectuer la phase de calibrage en courbure ou la phase de mesure en courbure,
- la figure 4 représente schématiquement la configuration du dispositif de mesure pour effectuer la phase de calibrage en pente et,
- la figure 5 représente schématiquement la configuration du dispositif de mesure pour effectuer la phase de mesure en pente.

### Meilleure manière de réaliser l'invention :

En référence aux figures, l'invention concerne un procédé et un dispositif permettant de quantifier au moyen de données métriques au moins une grandeur géométrique d'une surface à mesurer S optiquement réfléchissante.

Au cours de ce procédé, on observe à l'aide d'une caméra 2 l'image d'une surface à mesurer S optiquement réfléchissante disposée dans un espace de mesure 1.

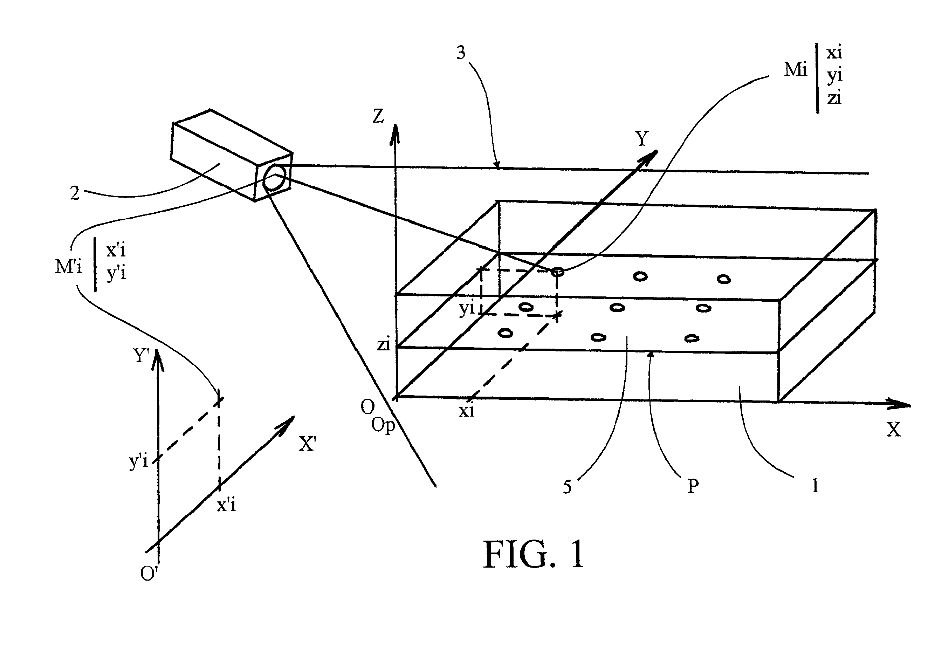

L'espace de mesure 1 illustré par la figure 1 est préalablement défini. Il est associé à un repère spatial O, X, Y, Z orthonormé d'origine O, d'axes X, Y, Z. On dispose dans cet espace de mesure 1 une surface optiquement réfléchissante soit de référence P, Ci, soit à mesurer S et, une caméra 2 de sorte que son champ de vision 3 couvre l'espace de mesure 1. Cette caméra 2 permet de visualiser une image que l'on associe à un repère plan O', X', Y'.

Ce procédé comporte au moins une phase de calibrage et une phase de mesure. La phase de calibrage permet lors de la phase de mesure d'interpréter l'image de la surface à mesurer S vue par la caméra 2 et de transformer cette image en valeurs quantitatives caractérisant une ou plusieurs grandeurs géométriques de la surface à mesurer S.

Pour effectuer la phase de calibrage, on dispose une mire 6, 10 associée à un repère plan O", X", Y" et comportant des points référence M"i de sorte que ces points référence M"i se reflètent sur la surface de référence P, Ci en des points Mi et on observe les points vus M'i image des points Mi. On établit ensuite des correspondances uniques entre ces points vus M'i et les points référence M"i, la nature de ces correspondances uniques dépendant de la méthode utilisée.

On peut en effet effectuer cette phase de calibrage selon deux méthodes différentes, permettant pour l'une de mesurer des courbures et pour l'autre de mesurer des pentes. Ces deux méthodes de calibrage et les phases de mesure correspondantes sont détaillées ci-après.

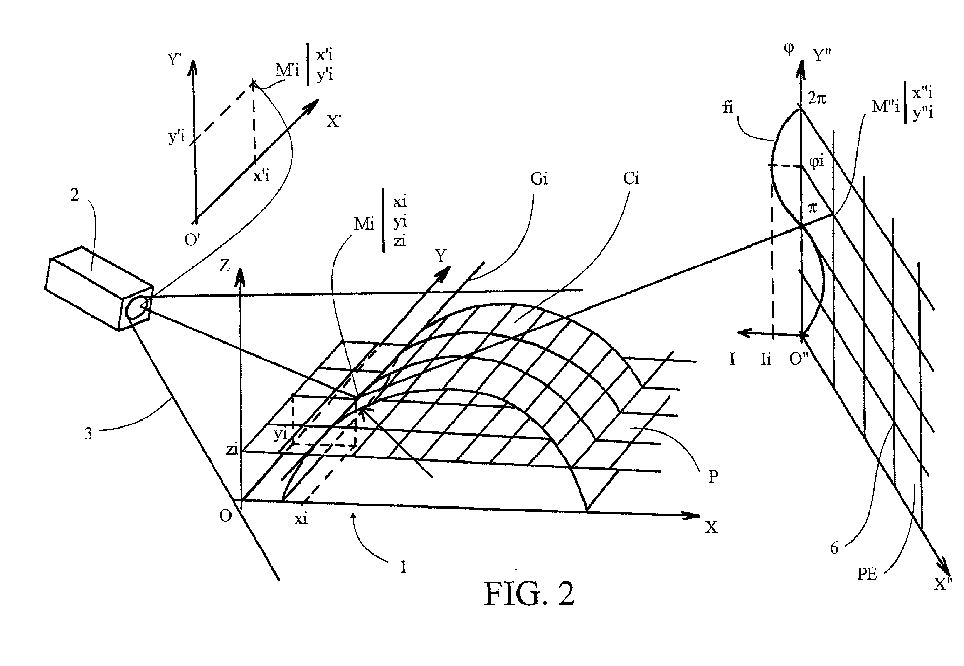

Selon une première méthode de calibrage en courbure particulièrement bien adaptée pour relever localement des courbures 1/Ri et en particulier pour détecter tout défaut de courbure, on oriente comme illustré par la figure 2 la caméra 2 de sorte que son champ de vision 3 soit rasant par rapport à la surface de référence P, Ci. On dispose une mire 6 de manière à ce qu'elle soit située à l'opposée de la caméra 2 par rapport à la surface de référence P, Ci et de sorte que la caméra 2 voit l'image de la mire sur cette surface de référence P, Ci.

La méthode de calibrage en courbure peut comporter une étape optionnelle de calibrage du plan. Cette étape, illustrée par la figure 1, consiste à calibrer un plan de référence P comportant des points de coordonnées xi, yi, dans le repère spatial O, X, Y, Z dont la coordonnée zi selon l'axe Z est connue. Cette étape optionnelle permettra, le cas échéant, de connaître en plus de la courbure 1/Ri en un point Mi, ses coordonnées xi, yi. En fonction du domaine d'application, la connaissance de ces coordonnées xi, yi sera nécessaire ou non.

Afin de réaliser cette étape optionnelle de calibrage du plan, on place sensiblement dans le plan de référence P une mire 5 constituée par toute surface permettant d'assurer une correspondance unique entre un de ses points Mi et le point vu M'i correspondant à son image. Cette correspondance unique est par exemple établie au moyen d'un motif aux paramètres dimensionnels connus. Ce motif peut par exemple être constitué par un ou plusieurs réseaux de lignes formant par exemple un quadrillage. Ce motif peut également être constitué comme illustré sur la figure 1 par un réseau de points ou par tout autre motif rendu visible sur la surface de la mire 5 par tout procédé de marquage ou de gravure connu tel que par exemple l'impression, l'attaque chimique, etc. On peut également utiliser une mire 5 portant un motif dont les paramètres dimensionnels ne sont pas connus au départ et pour lequel on effectue une opération préalable pour déterminer ces paramètres dimensionnels, par tout procédé de mesure connu.

On visualise à l'aide de la caméra 2 les points vus M'i, images des points Mi de la mire 5 sensiblement confondue avec le plan de référence P. On traite cette image de manière à définir les coordonnées x'i, y'i de chaque point vu M'i dans le repère plan O', X', Y' de l'image. Chaque point vu M'i correspond par exemple à un pixel donné de la caméra 2. On établit ainsi une règle de conversion entre les coordonnées x'i, y'i des points vus M'i et les coordonnées xi, yi des points Mi. A l'issue de cette étape de calibrage en plan, on peut donc établir une correspondance unique entre chaque pixel ou point vu M'i de la caméra 2 et son point Mi correspondant et réciproquement. En observant un point vu M'i, image d'un point Mi appartenant sensiblement au plan de référence P, on arrive ainsi à déterminer les coordonnées xi, yi du point Mi.

Une deuxième étape du calibrage en courbure illustrée par la figure 2 consiste à calibrer l'image vue par la caméra 2 en fonction d'une surface de référence Ci. On utilise une surface de référence Ci constituée par exemple d'au moins un étalon de courbure Ci dont la courbure 1/Ri est connue, Ri étant le rayon de courbure. De manière générale, on utilise une série d'étalons de courbures Ci, formés par exemple de pièces métalliques massives, comportant chacun une face correspondant à une portion de cylindre ou de parabole de courbures 1/Ri connues. Ces étalons de courbure Ci sont par exemple obtenus par un procédé d'électroérosion et leurs faces peuvent être rendues réfléchissantes par polissage. Les étalons de courbure Ci utilisés sont choisis pour avoir des courbures 1/Ri encadrant les différentes courbures attendues sur la surface à mesurer S.

Les points référence M"i de la mire 6 peuvent être matérialisés par des marquages, par exemple des cercles dont les centres ont des coordonnées x"i, y"i connues dans le repère plan O", X", Y". La mire 6 peut également comporter un codage d'intensité Ii et/ou de couleur, variable d'un point à l'autre de sa surface. La variation d'intensité Ii et/ou de couleur sur la surface de la mire 6 peut être définie par une fonction prédétermmée selon au moins l'axe Y" de la mire 6 et correspondre par exemple à une fonction sinusoïdale fi. La mire 6 est arbitrairement représentée sur la figure 2 par un quadrillage.

On place un étalon de courbure Ci dans l'espace de mesure 1 et on fait la mise au point de la caméra 2 sur cet étalon de courbure Ci. On observe avec la caméra 2 les points vus M'i, images des points référence M"i de la mire 6 après réflexion sur l'étalon de courbure Ci aux points Mi, on établit une correspondance unique entre les variations des valeurs mesurées aux points vus M'i et la courbure 1/Ri connue de l'étalon de courbure Ci. On déplace l'étalon de courbure Ci en différentes positions de l'espace de mesure 1 et on répète l'observation de l'image vue par la caméra 2 et l'établissement de la correspondance unique. On utilise plusieurs étalons de courbure Ci ayant chacun une courbure 1/Ri différente et on répète l'observation de l'image vue par la caméra 2 et l'établissement de la correspondance unique. Cette étape réalisée en quelques points Mi du plan de référence avec plusieurs étalons de différentes courbures 1/Ri permet de déduire une loi générale valable pour tout point Mi et toute courbure 1/Ri dans la plage de courbure souhaitée. Le nombre de points de mesure Mi sera déterminé en fonction de la précision souhaitée pour la correspondance unique.

Selon un mode de réalisation particulier du calibrage en courbure, on place l'étalon de courbure Ci de sorte que sa génératrice Gi confondue avec le plan référence P soit sensiblement parallèle à l'axe Y et on effectue la mise au point de la caméra 2 sensiblement sur l'étalon de courbure Ci. La courbure 1/Ri déduite correspondra donc sensiblement à la courbure 1/Rix selon l'axe X.

Selon une variante de réalisation particulière du calibrage en courbure, la mire 6 comporte un codage d'intensité Ii variant d'un point à l'autre de sa surface. Cette variation suit par exemple une fonction sinusoïdale fi représentée sur la figure 2 reliant de manière connue l'intensité lumineuse Ii de chaque point référence M"i à sa phase ϕi. Par une méthode telle que le décalage de phase temporel, le décalage de phase spatial, ou par calcul direct de phase au moyen de la transformée de Fourrier de l'image constituée par les valeurs mesurées aux points vus M'i, on établit une correspondance unique entre l'intensité l'i observée aux points vus M'i, image des points référence M"i, avec la phase ϕi. Dans un deuxième temps, on effectue cette opération simultanément ou non pour tout ou partie des points vus M'i de l'image. De manière générale, on effectue cette opération sur autant de points vus M'i correspondants à des points de mesure qu'il y a de pixels concernés par l'étalon de courbure Ci.

On détermine entre les points vus M'i voisins, ou pixels voisins, la dérivée de la phase ϕi sensiblement selon l'axe X. Une méthode simple pour effectuer cette dérivée sensiblement selon l'axe X consiste à dériver selon l'axe Y' du repère plan O', X', Y' lié à l'image vue par la caméra 2. Cette dérivée est de manière générale constante sur toute la surface de l'étalon de courbure Ci. On associe enfin cette variation de phase Δϕi obtenue avec la courbure 1/Rix selon l'axe X de l'étalon de courbure Ci au point Mi. On place ensuite l'étalon de courbure Ci en différents points de l'espace de mesure 1 de manière à mesurer en différents points la variation de Δϕi dans l'espace de mesure 1.

On utilise ensuite un second étalon de courbure Ci+1 (non représenté) de courbure 1/Ri+1 également connue avec lequel on répète ces mêmes étapes, puis éventuellement avec d'autres étalons de courbure de courbures différentes, jusqu'à ce que l'on soit en mesure d'établir une loi générale de transformation de la variation de phase Δϕi en courbure 1/Rix, la variation de phase Δϕi étant la variation entre les phases ϕi observées au moyen de la caméra 2. Cette variation de phase Δϕi est calculée entre pixels voisins représentant des points Mi voisins et décalés les uns par rapport aux autres sensiblement selon la l'axe X, 1/Rix étant la courbure correspondante de l'étalon de courbure Ci ou de la surface à mesurer S au point Mi selon l'axe X. Cette loi générale de transformation peut s'exprimer au moyen d'une équation mathématique.

A l'issue de cette étape, la loi générale de transformation de la variation de phase Δϕi en courbure 1/Rix permet, en mesurant les phases ϕi puis en calculant les variations de phase Δϕi dans selon l'axe X, en tout point Mi de la surface à mesurer S située sensiblement dans le plan P, de connaître la courbure 1/Rix selon l'axes X en chacun de ces points Mi. Cette loi sera enregistrée et les paramètres du montage seront figés pour effectuer l'étape de mesure.

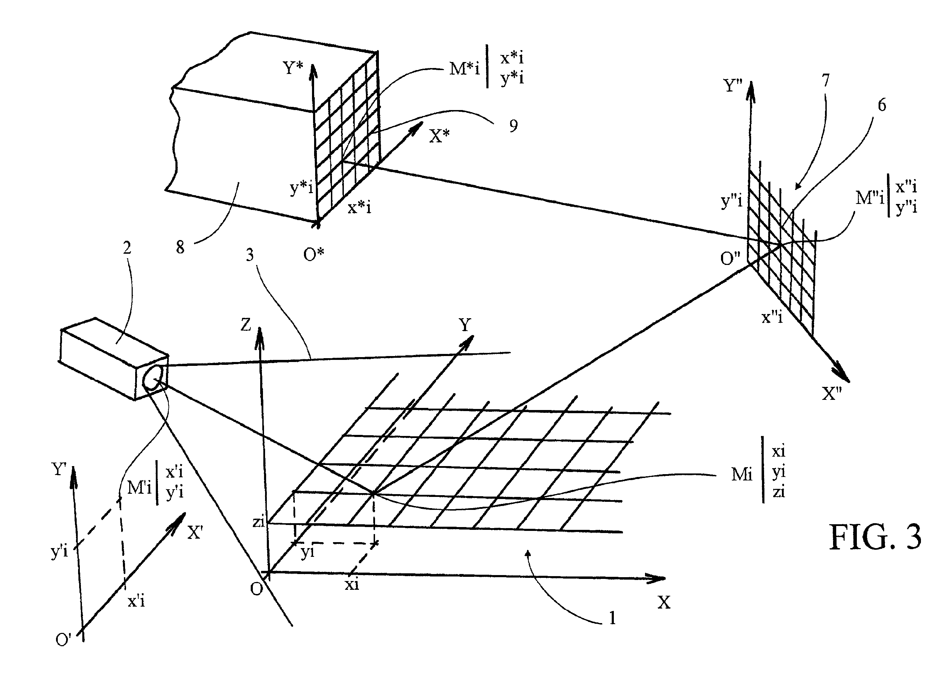

Selon une autre variante de réalisation, la mire 6 peut être obtenue, comme illustré par la figure 3, par projection au moyen d'un dispositif de projection 8 d'une mire 9 sur un plan intermédiaire 7. Les points référence M*i de la mire 9 sont ainsi projetés aux points M"i de la mire 6 et, après réflexion aux points Mi de la surface à mesurer S sont observés sur l'image de la caméra 2 aux points vus M'i ou pixels.

Après la phase de calibrage en courbure, on effectue la phase de mesure en courbure de la surface à mesurer S optiquement réfléchissante. On place la surface à mesurer S dans l'espace de mesure 1, on observe avec la caméra 2 les points vus M'i image des points référence M"i de la mire 6 après réflexion sur la surface à mesurer S aux points Mi, et on en déduit la courbure 1/Ri aux points Mi de la surface à mesurer S en fonction de la ou des lois de correspondance unique issues de la ou des phases de calibrage en courbure précédentes.

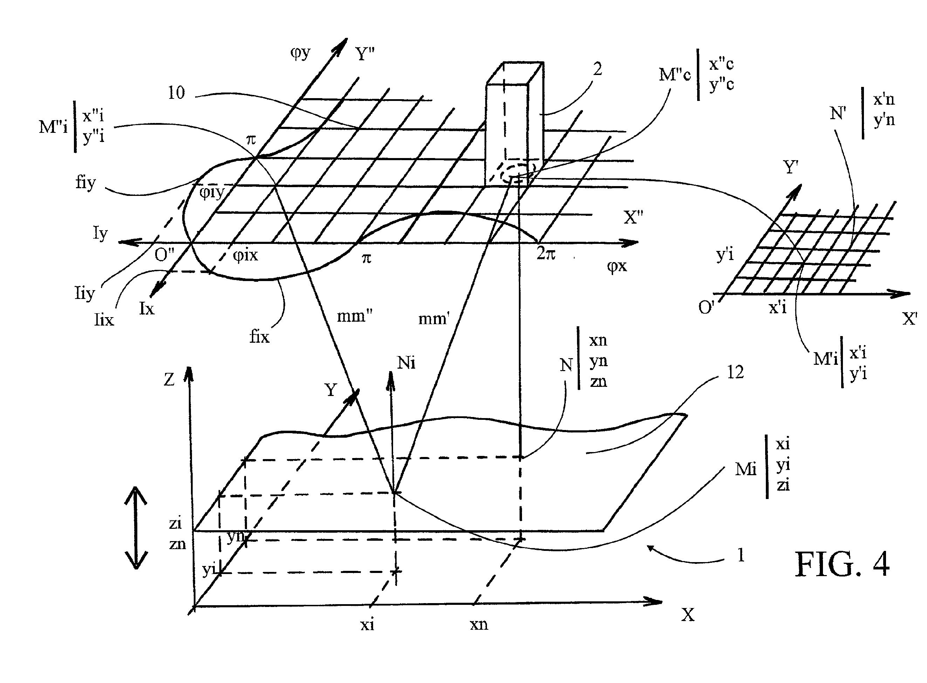

Selon une seconde méthode de calibrage appelée calibrage en pente particulièrement bien adaptée pour la mesure de grandeurs géométriques d'une grande surface à mesurer S optiquement réfléchissante située dans l'espace de mesure 1, on dispose comme illustré par la figure 4 une mire 10 sensiblement plane et de repère plan O", X", Y", sensiblement en regard de l'espace de mesure 1 et la caméra 2 de sorte que son centre optique soit disposé sensiblement au voisinage de la mire 10. La mire 10 peut également comporter des motifs calibrés à l'origine ou nécessitant une opération de calibrage comme dans l'exemple précédent. Cette mire 10 peut comporter, comme la mire 6, un codage d'intensités différentes d'une même couleur ou un codage de couleurs différentes. On utilise comme surface de référence au moins un plan de référence P sensiblement parallèle à la mire 10 et de coordonnée selon l'axe Z connue. Ce plan de référence P est par exemple un miroir 12 sensiblement plan de coordonnée zi selon l'axe Z connue.

Comme dans le cas du calibrage en courbure, la première étape du calibrage en pente illustrée par la figure 4 consiste à réaliser un calibrage du plan permettant d'établir une correspondance unique entre les coordonnées des points Mi dans le repère spatial O, X, Y, Z et dont la coordonnée selon l'axe Z est connue et les coordonnées des points vus M'i dans le repère plan O', X', Y'. Dans le cas du calibrage en pente, cette étape est indispensable.

Pour établir cette correspondance unique et, comme pour le calibrage en courbure, on observe avec la caméra 2 les points vus M'i, images des points référence M"i de la mire 10 après réflexion sur le miroir 12 aux points Mi. Connaissant les coordonnées des points référence M"i et du point M"c, M"c étant le centre optique de l'objectif de la caméra 2, de coordonnées x"c, y"c, on détermine en appliquant les lois de la réflexion les coordonnées du point Mi. En effet, on sait que les coordonnées xi, yi selon les axes X, Y de Mi sont égales aux moitiés des sommes des coordonnées x"c, x"i selon l'axe X et y"c, y"i selon l'axe Y. On détermine ainsi les coordonnées xi, yi de Mi pour lequel zi est déjà connu. Les coordonnées x"c, y"c sont mesurées ou déterminées empiriquement, en écrivant par exemple que les points Mc, M'c et M"c sont alignés, M'c étant l'image de Mc après réflexion sur le miroir 12 en Mc, et/ou que la mesure en M'c est indépendante de zc.

Une seconde étape du calibrage en pente également illustré par la figure 4 consiste à calibrer l'axe Z. Pour effectuer cette seconde étape, on déplace le miroir 12 formant le plan de référence P parallèlement à lui-même en différentes coordonnées zi connues de l'espace de mesure 1 et on répète l'observation de l'image vue avec la caméra 2 et l'établissement de la correspondance unique pour des coordonnées zi selon l'axe Z différentes. On mesure ainsi pour chaque position du miroir 12 les coordonnées x'i et y'i du point vu M'i, image du point référence M"i après réflexion sur le miroir 12, dont on déduit les coordonnées xi, yi du point Mi du miroir 12 de coordonnée zi selon l'axe Z. On obtient ainsi la correspondance unique entre les coordonnées x'i, y'i, du point vu M'i et les coordonnées xi, yi, du point Mi pour chaque coordonnée zi, cette correspondance unique étant valable pour tout point Mi observé par la caméra 2 au point vu M'i ou pixel. Cette correspondance unique est théoriquement linéaire et ne nécessite donc que deux mesures pour être établie. Néanmoins, à cause d'aberrations, cette correspondance unique est plus souvent non linéaire et nécessite d'autant plus de points de mesure que l'on souhaite qu'elle soit fidèle à la réalité.

Selon une variante de réalisation particulière, la mire 10 comporte un codage d'intensités lumineuses Iix et Iiy respectivement selon les axes X", Y", ces intensités variant d'un point à l'autre de sa surface. Ces variations sont par exemple réalisées au moyen de deux fonctions sinusoïdales fix et fiy. La fonction fix relie de manière connue l'intensité lumineuse Iix selon l'axe X" et x"i, au moyen par exemple de la phase ϕix si Iix est modulée sinusoïdalement selon l'axe X". La fonction fiy relie de manière connue l'intensité lumineuse Iiy selon l'axe Y" et y"i, au moyen par exemple de la phase ϕiy si Iiy est modulée sinusoïdalement selon l'axe Y. Ces fonctions sinusoïdale fix, fiy peuvent être présentes simultanément ou successivement sur la mire 10.

Pour réaliser les première et deuxième étapes de calibrage en pente de cette variante de réalisation, on observe avec la caméra 2 les points vus M'i image des points M"i après réflexion aux points Mi et on établit une correspondance unique entre d'une part l'intensité I'i des points vus M'i et la coordonnée zi du miroir 12 et d'autre part les coordonnées xi, yi des points Mi. Par une méthode telle que le décalage de phase temporel, le décalage de phase spatial, ou par calcul direct de phase au moyen de la transformée de Fourrier de l'image des intensités l'ix, I'iy si les intensités Iix, Iiy sont modulées sinusoïdalement, ou par toute autre méthode, on relie les intensités observées I'ix, I'iy avec les coordonnées xi" yi". On connaît donc les coordonnées x"i, y"i du point référence M"i de la mire 10, dont l'image est observée au point vu M'i ou pixel après réflexion au point Mi de la surface à mesurer S. La suite de la phase de calibrage en pente peut être effectuée comme précédemment expliqué.

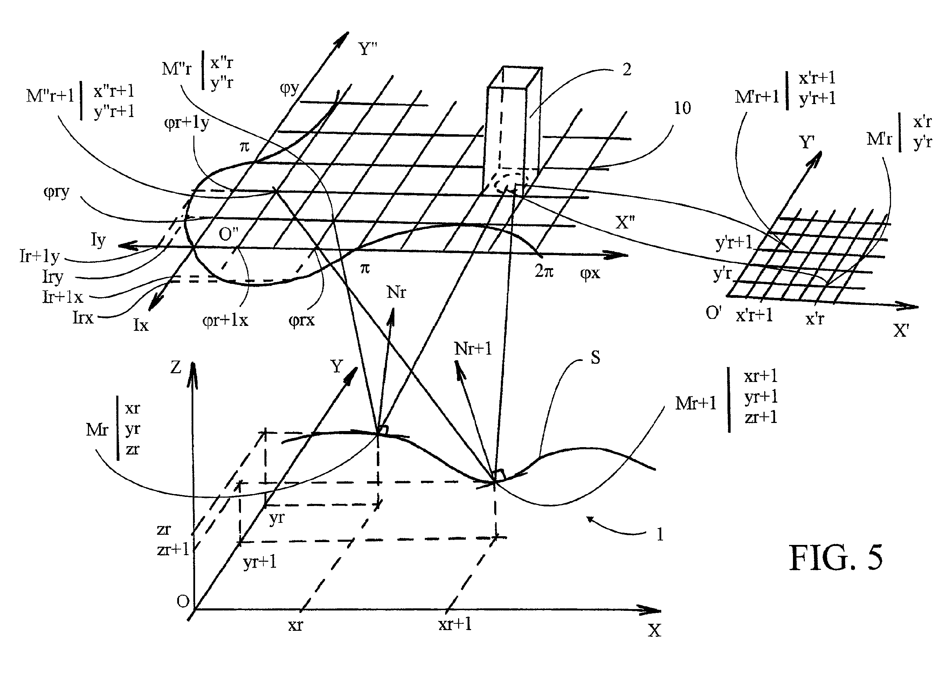

Après la phase de calibrage en pente, on effectue la phase de mesure en pente de la surface à mesurer S optiquement réfléchissante illustrée par la figure 5.

Dans un premier temps, on place dans l'espace de mesure 1 la surface à mesurer S optiquement réfléchissante et dont on connaît au moins la coordonnée zr selon l'axe Z d'au moins un point Mr. Ce point Mr correspond par exemple à une butée mécanique ou à un point quelconque de la surface à mesurer S dont la coordonnée zr est connue et mesurée séparément, par exemple au moyen d'un capteur. On observe avec la caméra 2 le point vu M'r, image du point référence M"r de la mire 10 après réflexion sur la surface S au point Mr. En repérant par exemple par un moyen visuel le point Mr, on observe les coordonnées x'r, y'r du point vu M'r correspondant. Connaissant la coordonnée zr selon l'axe Z, on en déduit, grâce à la précédente correspondance unique, les coordonnées xr, yr du point Mr dans le repère spatial O, X, Y, Z.

Dans un deuxième temps, on détermine le vecteur normal Nr au point Mr. Selon les lois de la réflexion et en référence à la figure 4 on sait que si M"i est le point référence appartenant à la mire 10, Mi le point correspondant sur la surface à mesurer S et M"c le centre optique de l'objectif de la caméra 2, mm" est le vecteur unitaire colinéaire à MiM"i, mm' est le vecteur unitaire colinéaire à MiM"c, Ni est le vecteur normal à la surface au point Mi, les vecteurs mm", mm' et Ni sont liés par la relation mm" + mm' = k x Ni dans laquelle k est une grandeur scalaire. Pour définir le vecteur normal Nr au point Mr, on applique donc cette même relation qui s'écrit alors mrmr" + mrmr' = k . Nr avec Mr" point référence de la mire 10 dont l'image est le point vu Mr' se formant après réflexion sur la surface à mesurer S au point Mr dont on connaît la coordonnée zr selon l'axe Z, mrmr" le vecteur unitaire colinéaire à MrM"r, mrmr' le vecteur unitaire colinéaire à MrM"c. Transposée sur les axes X, Y, Z cette relation donne un système d'équations permettant de déterminer le vecteur Nr normal en Mr à la surface à mesurer S donc les pentes Prx, Pry selon les axes X et Y en ce point.

Dans un troisième temps, on considère un point Mr+1 voisin de Mr dont on décide provisoirement et arbitrairement que la coordonnée théorique zr+1th selon l'axe Z est approximativement égale à zr. On observe les coordonnées x'r+1, y'r+1 du point vu M'r+1 image de Mr+1 de la surface à mesurer S. Connaissant x'r, y'r et la coordonnée zr+1th on détermine grâce au calibrage précédent les coordonnées xr+1, yr+1 du point Mr+1. On mesure les intensités I'ix et I'iy dont on détermine les coordonnées x"r+1 et y"r+1 du point référence M"r+1 1 de la mire 10. Connaissant les coordonnées xr+1, yr+1 et zr+1th de Mr+1, les coordonnées x"r+1 et y"r+1 de M"r+1 et les coordonnées du point C, on détermine, en résolvant le système d'équations décrit précédemment, le vecteur Nr+1 normal au point Mr+1 à la surface à mesurer S. Connaissant Mr et Nr+1, connaissant xr+1 et yr+1, sachant que Nr+1 est orthogonal à MrMr+1, on détermine la vraie coordonnée zr+1 en écrivant que le produit scalaire MrMr+1 par Nr+1 est égale à zéro ce qui donne une équation dont l'inconnu est zr+1. Les pentes Pr+1x, Pr+1y sont directement calculées à partir de Nr+1 au moyen des relations suivantes : Pr+1x = Nr+1x / Nr+1z et Pr+ly = Nr+1y / Nr+1z dans lesquelles Pr+1x et Pr+1y sont respectivement les pentes selon les axes X et Y au point Mr+1, Nrx, Nry et Nrz sont les projections respectivement selon les axes X, Y et Z du vecteur Nr.

On peut par la suite effectuer un calcul itératif permettant d'affiner les résultats et d'augmenter la précision de la coordonnée zr+1.

En répétant cette phase de mesure de point proche en point proche, on définit ainsi pour chacun des points de la surface à mesurer S l'ensemble des pentes Pix, Piy selon les axes X et Y et l'ensemble des coordonnées xi, yi, zi des points Mi vus aux points M'i par la camera 2. Les pentes Pix, Piy de tout point intermédiaire à deux points mesurés peuvent être obtenues par interpolation des pentes des points voisins mesurés. On est ainsi en mesure de déterminer en tout point Mi de la surface à mesurer S les pentes Pix, Piy respectivement selon les axes X, Y

Le dispositif de mesure selon l'invention permettant la mise en oeuvre du procédé de mesure d'au moins une grandeur géométrique d'une surface à mesurer S optiquement réfléchissante décrit ci-dessus comprend notamment au moins un espace de mesure 1 dans lequel on place au moins une surface de référence P, Ci, ou à mesurer S, au moins une mire 6, 10 positionnée pour se refléter sur la surface de référence P, Ci, ou à mesurer S et au moins une caméra 2 positionnée pour que son champ de vision 3 couvre l'espace de mesure 1 et voit le reflet de la mire 6, 10 sur la surface de référence P, Ci, ou à mesurer S. La caméra 2 est associée à une unité informatique (non représentée) agencée pour interpréter l'image de la surface à mesurer S optiquement réfléchissante vue par la caméra 2 et en déduire des valeurs quantitatives caractérisant au moins une grandeur géométrique de la surface à mesurer S en fonction d'au moins une surface de référence P, Ci, un cliché de la caméra 2 permettant de visualiser tous les points de la surface à mesurer S.

### Possibilités d'application industrielle :

Cette description met bien en évidence le fait que le procédé selon la présente invention permet une fois le dispositif de mesure calibré de mesurer rapidement et avec précision une ou plusieurs grandeurs géométriques de grandes surfaces optiquement réfléchissantes en déterminant selon la méthode utilisée la courbure d'un point de la surface à mesurer ou la pente en chacun des points de la surface à mesurer optiquement réfléchissante et la position dans l'espace de mesure de chacun de ces points.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Procédé de mesure d'au moins une grandeur géométrique d'une surface à mesurer (S) optiquement réfléchissante, au cours duquel on observe à l'aide d'une caméra (2) l'image de ladite surface à mesurer (S), ce procédé comportant au moins une phase de mesure précédée d'au moins une phase de calibrage, ladite phase de calibrage étant réalisée de manière à permettre l'interprétation de l'image de ladite surface à mesurer (S) vue par ladite caméra (2) lors de ladite phase de mesure et ainsi de transformer cette image en valeurs quantitatives caractérisant, pour une multitude de points formant ladite surface à mesurer (S) optiquement réfléchissante, au moins l'une des grandeurs géométriques choisie dans le groupe comprenant au moins la pente, la courbure, la position dans l'espace, pour chacun de ces points, procédé selon lequel pour effectuer ladite phase de calibrage, on définit un espace de mesure (1) auquel on associe un repère spatial (O, X, Y, Z), on dispose dans ledit espace de mesure (1) au moins une surface de référence (P, Ci) optiquement réfléchissante, on dispose ladite caméra (2) de sorte que son champ de vision (3) couvre ledit espace de mesure (1) et voit ladite surface de référence (P, Ci), on associe à ladite image vue par ladite caméra (2) un repère plan (O', X', Y'), on dispose une mire (6, 10) associée à un repère plan (O", X", Y") et comportant des points référence (M"i), de sorte que lesdits points référence (M"i) se reflètent sur ladite surface (P, Ci) en des points (Mi), on observe avec ladite caméra (2) les points vus (M'i) image desdits points référence (M"i) après réflexion sur ladite surface (P, Ci) auxdits points (Mi) et on établit une correspondance unique entre lesdits points vus (M'i) et lesdits points référence (M"i), **caractérisé en ce que** ladite phase de calibrage comprend une étape de calibrage plan au cours de laquelle on établit une correspondance unique entre les coordonnées (x', y') desdits points vus (M'i) et les coordonnées (x, y) desdits points (Mi) dont la coordonnée selon l'axe Z est connue, et, **en ce que** ladite phase de calibrage comprend une étape de calibrage en pente pour laquelle on dispose ladite mire (10) sensiblement en regard dudit espace de mesure (1) et ladite caméra (2) de sorte que son centre optique soit disposé sensiblement au voisinage de ladite mire (10), **en ce que** l'on utilise comme surface de référence au moins un plan de référence (P) constitué d'un miroir (12) sensiblement parallèle à ladite mire (10) et de coordonnée zi connue selon l'axe Z, **en ce que** l'on observe avec ladite caméra (2) lesdits points vus (M'i) image desdits points référence (M"i) de ladite mire (10) après réflexion sur ladite surface de référence (P) auxdits points (Mi) et **en ce que** l'on établit ladite correspondance unique entre les coordonnées (x', y') desdits points vus (M'i) et les coordonnées (x, y) desdits points (Mi) dont la coordonnée selon l'axe Z est connue.

2. Procédé selon la revendication 1, **caractérisé en ce que** l'on déplace ledit miroir (12) formant ledit plan de référence (P) parallèlement à lui-même en différentes coordonnées zi dudit espace de mesure (1) et **en ce que** l'on répète l'observation de ladite image vue avec ladite caméra (2) et l'établissement de ladite correspondance unique.

3. Procédé selon l'une quelconque des revendications 1 ou 2, **caractérisé en ce que**, pour mesurer la pente de ladite surface en une multitude de points, on place ladite surface à mesurer (S) optiquement réfléchissante dans ledit espace de mesure (1), on observe avec ladite caméra (2) lesdits points vus (M'i) image desdits points référence (M"i) de ladite mire (10) après réflexion sur ladite surface à mesurer (S) auxdits points (Mi) et on en déduit les coordonnée (xi, yi, zi) auxdits points (Mi) en fonction desdites lois de correspondance unique issues de ladite phase de calibrage et les pentes (Pix, Piy) respectivement selon les axes X et Y aux points (Mi).

4. Procédé selon la revendication 1, **caractérisé en ce que** ladite mire (10) comporte un codage d'intensités (Iix, Iiy) et/ou de couleurs variables d'un point à l'autre de sa surface, ces variations étant définies par des fonctions connues selon respectivement lesdits axes X" et Y" de ladite mire (10), **en ce que** l'on observe avec ladite caméra (2) lesdits points vus (M'i) image desdits points référence (M"i) après réflexion sur ledit miroir (12) aux points (Mi) et **en ce que** l'on établit les correspondances uniques entre d'une part les intensité mesurées (I'ix, I'iy) mesurées et/ou les couleurs mesurées ou leurs variations auxdits points vus (M'i), ladite coordonnée zi dudit plan de référence (P) et d'autre part les coordonnées xi, yi dudit point (Mi).

5. Procédé selon la revendication 1, **caractérisé en ce que** ladite phase de calibrage comprend une étape de calibrage en courbure pour laquelle on dispose ladite caméra (2) de sorte que son champ de vision (3) soit rasant par rapport à ladite surface de référence (Ci), on dispose ladite mire (6) de sorte qu'elle soit située à l'opposée de ladite caméra (2) par rapport à ladite surface de référence (Ci) et on fait la mise au point de ladite caméra (2) sensiblement au niveau de ladite surface de référence (Ci) et au cours de laquelle on utilise comme surface de référence au moins un étalon de courbure (Ci) ayant au moins une courbure 1/Ri connue selon l'un des axes X, Y, on observe avec ladite caméra (2) lesdits points vus (M'i) image desdits points référence (M"i) de ladite mire (6) après réflexion sur ledit étalon de courbure (Ci) aux points (Mi) et on établit une correspondance unique entre les valeurs mesurées ou leurs variations auxdits points vus (M'i) et ladite courbure 1/Ri dudit étalon de courbure (Ci).

6. Procédé selon la revendication 5, **caractérisé en ce que** ladite mire (6) comporte un codage d'intensité (Ii) et/ou de couleur variable d'un point à l'autre de sa surface, cette variation étant définie par une fonction connue selon au moins un axe X", Y" de ladite mire (6), **en ce que** l'on observe avec ladite caméra (2) lesdits points vus (M'i) image desdits points référence (M"i) de ladite mire (6) après réflexion sur ledit étalon de courbure (Ci) aux points (Mi) et **en ce que** l'on établit une correspondance unique entre la variation de l'intensité (I'i) mesurée et/ou de la couleur mesurée ou leur variation aux-dits points vus (M'i) et ladite courbure 1/Ri dudit étalon de courbure (Ci).

7. Procédé selon la revendication 5, **caractérisé en ce que** l'on déplace ledit étalon de courbure (Ci) formant ladite surface de référence en différentes positions dudit espace de mesure (1) et **en ce que** l'on répète l'observation de ladite image vue par ladite caméra (2) et l'établissement de ladite correspondance unique en un nombre de points (Mi) déterminé en fonction de la précision souhaitée pour ladite correspondance unique.

8. Procédé selon la revendication 5, **caractérisé en ce que** l'on utilise plusieurs étalons de courbure (Ci) ayant chacun une courbure 1/Ri différente.

9. Procédé selon l'une quelconque des revendications 5 à 8, **caractérisé en ce que**, pour mesurer la courbure de ladite surface en une multitude de points, on place ladite surface à mesurer (S) optiquement réfléchissante dans ledit espace de mesure (1), on observe avec ladite caméra (2) lesdits points vus (M'i) image desdits points référence (M"i) de ladite mire (6) après réflexion sur ladite surface à mesurer (S) auxdits points (Mi) et on en déduit la courbure 1/Ri auxdits points (Mi) en fonction des lois de correspondance unique issues de ladite phase de calibrage.

10. Dispositif de mesure pour la mise en oeuvre du procédé de mesure d'au moins une grandeur géométrique pour une multitude de points d'une surface à mesurer (S) optiquement réfléchissante selon l'une quelconque des revendications précédentes, **caractérisé en ce qu'**il comprend au moins une surface de référence (P, Ci) optiquement réfléchissante et agencée pour calibrer ledit dispositif, au moins un espace de mesure (1) dans lequel on place ladite surface de référence à mesurer (S), au moins une mire (6, 10) positionnée pour se refléter sur ladite surface de référence (P, Ci), ou sur ladite surface à mesurer (S), au moins une caméra (2) positionnée pour que son champ de vision (3) couvre ledit espace de mesure (1) et voit l'image de ladite mire (6, 10) sur ladite surface de référence (P, Ci), ou sur ladite surface à mesurer (S), et **en ce que** ladite caméra (2) est associée à une unité informatique agencée pour interpréter l'image de ladite surface à mesurer (S) vue par ladite caméra (2) et en déduire des valeurs quantitatives pour ladite multitude de points formant ladite surface à mesurer (S), ces valeurs quantitatives caractérisant au moins l'une des grandeurs géométriques choisie dans le groupe comprenant au moins la pente, la courbure, la position dans l'espace, pour chacun de ces points en fonction d'au moins une surface de référence (P, Ci).

## Patentansprüche

1. Verfahren zur Messung mindestens einer geometrischen Größe einer zu messenden optisch reflektierenden Fläche (S), in dem man mittels einer Kamera (2) das Bild der besagten zu messenden Fläche (S) misst, wobei dieses Verfahren aus mindestens einer Mess-Phase besteht, der mindestens eine Kalibrierungs-Phase vorausgeht, wobei die besagte Kalibrierungs-Phase erfolgt, um die Auswertung des Bilds der während der besagten Mess-Phase von der besagten Kamera (2) gesehenen besagten zu messenden Fläche (S) zu ermöglichen und somit dieses Bild in quantitative Werte umzuwandeln, die für eine Vielzahl Punkte, die die besagte zu messende optisch reflektierende Fläche (S) bilden, für jeden dieser Punkte mindestens eine der in der Gruppe bestehend aus der Neigung, der Krümmung, der Raumlage gewählten geometrischen Größen kennzeichnen, Verfahren nach welchem, um die besagte Kalibrierungs-Phase durchzuführen, man einen Mess-Bereich (1) festlegt, dem man ein räumliches Bezugssystem (O, X, Y, Z) zuweist, man in dem besagten Messbereich (1) mindestens eine optisch reflektierende Bezugsfläche (P, Ci) anordnet, man die besagte Kamera (2) so anordnet, dass ihr Sichtfeld (3) den besagten Mess-Bereich (1) abdeckt und die besagte Bezugsfläche (P, Ci) sieht, man dem besagten, von der besagten Kamera (2) gesehenen Bild ein flaches Bezugssystem (O', X', Y') zuweist, man ein mit einem flachen Bezugssystem (O", X", Y") zusammenarbeitendes und mit Bezugspunkten (M"i) versehenes Rasterbild (6, 10) anordnet, so dass sich die besagten Bezugspunkte (M"i) auf der besagten Fläche (P, Ci) an Punkten (Mi) widerspiegeln, man mit der besagten Kamera (2) die gesehenen Punkte (M'i) beobachtet, die ein Abbild der besagten Bezugspunkte (M"i) nach deren Spiegelung auf der besagten Fläche (P, Ci) an den besagten Punkten (Mi) darstellen, und man eine eindeutige Übereinstimmung zwischen den besagten gesehenen Punkten (M'i) und den besagten Bezugspunkten (M"i) herstellt, **dadurch gekennzeichnet, dass** die besagte Kalibrierungs-Phase einen Schritt der Kalibrierung in einer Ebene beträgt, während dem man eine eindeutige Übereinstimmung herstellt zwischen den Koordinaten (x', y') der besagten gesehenen Punkte (M'i) und den Koordinaten (x, y) der besagten Punkte (Mi), deren Z-Achsen-Koordinate bekannt ist, und dadurch, dass die besagte Kalibrierungs-Phase einen Schritt der Kalibrierung auf einer Neigung beträgt, bei welcher man das besagte Rasterbild (10) merklich gegenüber des besagten Mess-Bereichs (1) anordnet und man die besagte Kamera (2) so anordnet, dass sich ihr optisches Zentrum merklich in der Nähe des besagten Rasterbilds (10) befindet, dadurch, dass man als Bezugsfläche mindestens eine Bezugsebene (P) verwendet, die aus einem zum besagten Rasterbild (10) merklich parallelen Spiegel (12) mit bekannter Z-Achsen-Koordinate zi besteht, dadurch, dass man mit der besagten Kamera (2) die besagten gesehenen Punkte (M'i) beobachtet, die ein Abbild der besagten Bezugspunkte (M"i) des besagten Rasterbilds (10) nach deren Spiegelung auf der besagten Bezugsfläche (P) an den besagten Punkten (Mi) darstellen, und dadurch, dass man die besagte eindeutige Übereinstimmung zwischen den Koordinaten (x', y') der besagten gesehenen Punkte (M'i) und den Koordinaten (x, y) der besagten Punkte (Mi), deren Z-Achsen-Koordinate bekannt ist, herstellt.

2. Verfahren nach Anspruch 1, **dadurch gekennzeichnet, dass** man den besagten Spiegel (12), der die besagte Bezugsebene (P) bildet, zu sich selbst parallel in verschiedene zi-Koordinaten des besagten Mess-Bereichs (1) verschiebt und dadurch, dass man die Beobachtung des mit der besagten Kamera (2) gesehenen Bilds und die Herstellung der besagten eindeutigen Übereinstimmung wiederholt.

3. Verfahren nach einem beliebigen der Ansprüche 1 oder 2, **dadurch gekennzeichnet, dass**, um die Neigung der besagten Fläche an einer Vielzahl von Punkten zu messen, man die besagte zu messende optisch reflektierende Fläche (S) in den besagten Mess-Bereich (1) legt, man mit der besagten Kamera (2) die besagten Punkte (M'i) beobachtet, die ein Abbild der besagten Bezugspunkte (M"i) des besagten Rasterbilds (10) nach deren Spiegelung auf der besagten zu messenden Fläche (S) an den besagten Punkten (Mi) darstellen, und man daraus die Koordinaten (xi, yi, zi) an den besagten Punkten (Mi) gemäß den besagten aus der besagten Kalibrierungs-Phase erhaltenen eindeutigen Übereinstimmungsgesetzen und die Neigungen (Pix, Piy) auf der X- bzw. Y-Achse an den Punkten (Mi) ableitet.

4. Verfahren nach Anspruch 1, **dadurch gekennzeichnet, dass** das besagte Rasterbild (10) eine Kodierung mit variablen Intensitäten (Iix, Iiy) und/oder Farben von einem Punkt zu einem anderen seiner Fläche aufweist, wobei diese Variationen durch bekannte Funktionen nach der besagten X"- bzw. Y"-Achse des besagten Rasterbilds (10) definiert sind, dadurch, dass man mit der besagten Kamera (2) die besagten gesehenen Punkte (M'i) beobachtet, die ein Abbild der besagten Bezugspunkte (M"i) nach deren Spiegelung auf dem besagten Spiegel (12) an den Punkten (Mi) darstellen, und dadurch, dass man die eindeutigen Übereinstimmungen herstellt zwischen einerseits den gemessenen Intensitäten (I'ix, I'iy) und/oder den gemessenen Farben oder deren Variationen an den besagten gesehenen Punkten (M'i), der besagten Koordinate zi der besagten Bezugsebene (P) und andererseits den Koordinaten xi, yi des besagten Punkts (Mi).

5. Verfahren nach Anspruch 1, **dadurch gekennzeichnet, dass** die besagte Kalibrierungs-Phase einen Kalibrierungs-Schritt auf einer Wölbung beträgt, für den man die besagte Kamera (2) so anordnet, dass ihr Sichtfeld (3) in Bezug auf die besagte Bezugsfläche (Ci) streifend ist, man das besagte Rasterbild (6) so anordnet, dass es sich in Bezug auf die besagte Bezugsfläche (Ci) auf der der besagten Kamera (2) entgegen gesetzte Seite befindet und man die besagte Kamera (2) merklich auf die besagte Bezugsfläche (Ci) fokussiert, und während dem man als Bezugsfläche mindestens ein Wölbungsnormal (Ci) mit mindestens einer auf einer der Achsen X, Y bekannten Wölbung 1/Ri verwendet, man mit der besagten Kamera (2) die besagten gesehenen Punkte (M'i) beobachtet, die ein Abbild der besagten Bezugspunkte (M"i) des besagten Rasterbilds (6) nach deren Spiegelung auf dem besagten Wölbungsnormal (Ci) an den Punkten (Mi) darstellen, und man eine eindeutige Übereinstimmung zwischen den gemessenen Werten oder deren Variationen an den besagten gesehenen Punkten (M'i) und der besagten Wölbung 1/Ri des besagten Wölbungsnormals (Ci) herstellt.

6. Verfahren nach Anspruch 5, **dadurch gekennzeichnet, dass** das besagte Rasterbild (6) eine von einem Punkt zu einem anderen seiner Fläche variable Kodierung mit einer variablen Intensität (Ii) und/oder Farbe aufweist, wobei diese Variation durch eine nach mindestens einer Achse X", Y" des besagten Rasterbilds (6) bekannte Funktion definiert ist, dadurch, dass man mit der besagten Kamera (2) die besagten gesehenen Punkte (M'i) beobachtet, die ein Abbild der besagten Bezugspunkte (M"i) des besagten Rasterbilds (6) nach deren Spiegelung auf dem besagten Wölbungsnormal (Ci) an den Punkten (Mi) darstellen, und dadurch, das man eine eindeutige Übereinstimmung zwischen der Variation der gemessenen Intensität (I'i) und/oder der gemessenen Farbe oder deren Variation an den besagten gesehenen Punkten (M'i) und der besagten Wölbung 1/Ri des besagten Wölbungsnormals (Ci) herstellt.

7. Verfahren nach Anspruch 5, **dadurch gekennzeichnet, dass** man das besagte, die besagte Bezugsfläche bildende Wölbungsnormal (Ci) in verschiedene Positionen des besagten Mess-Bereichs (1) verschiebt und dadurch, dass man die Beobachtung des besagten von der besagten Kamera (2) gesehenen Bilds und die Herstellung der besagten eindeutigen Übereinstimmung an einer bestimmten Anzahl Punkten (Mi) in Abhängigkeit der für die besagte eindeutige Übereinstimmung gewünschten Genauigkeit wiederholt.

8. Verfahren nach Anspruch 5, **dadurch gekennzeichnet, dass** man mehrere Wölbungsnormale (Ci) einsetzt, jeweils mit einer unterschiedlichen Wölbung 1/Ri.

9. Verfahren nach einem beliebigen der Ansprüche 5 bis 8, **dadurch gekennzeichnet, dass** man, um die Wölbung der besagten Fläche an einer Vielzahl von Punkten zu messen, die besagte zu messende optisch reflektierenden Fläche (S) in den besagten Mess-Bereich (1) legt, man mit der besagten Kamera (2) die besagten gesehenen Punkte (M'i) beobachtet, die ein Abbild der besagten Bezugspunkte (M"i) des besagten Rasterbilds (6) nach deren Spiegelung auf der besagten zu messenden Fläche (S) an den besagten Punkten (Mi) darstellen, und man daraus die Wölbung 1/Ri an den besagten Punkten (Mi) nach den aus der besagten Kalibrierungs-Phase erhaltenen eindeutigen Übereinstimmungsgesetzen ableitet.

10. Mess-Einrichtung zur Durchführung des Verfahrens zur Messung mindestens einer geometrischen Größe für eine Vielzahl Punkte einer zu messenden optisch reflektierenden Fläche (S) nach einem beliebigen der vorhergehenden Ansprüche, **dadurch gekennzeichnet, dass** sie mindestens eine optisch reflektierenden Bezugsfläche (P, Ci) aufweist, die angeordnet ist, um die besagte Einrichtung zu kalibrieren, sowie mindestens einen Mess-Bereich (1) in den die besagte zu messende Bezugsfläche (S) gelegt wird, mindestens ein Rasterbild (6, 10), das angeordnet ist, um sich auf der besagten Bezugsfläche (P, Ci) oder auf der besagten zu messenden Fläche (S) zu widerspiegeln, und mindestens eine Kamera (2), die so angeordnet ist, das ihr Sichtfeld (3) den besagten Mess-Bereich (1) abdeckt und das Abbild des besagten Rasterbilds (6, 10) auf der besagten Bezugsfläche (P, Ci) oder auf der besagten zu messenden Fläche (S) sieht, und dadurch, dass die besagte Kamera (2) mit einer EDV-Einheit zusammenarbeitet, die ausgelegt ist, um das von der Kamera (2) gesehene Abbild der besagten zu messenden Fläche (S) zu verarbeiten und daraus für die besagte Vielzahl Punkte, die die besagte zu messende Fläche (S) bilden, quantitative Werte abzuleiten, wobei diese quantitativen Werte für jeden dieser Punkte mindestens eine der in der Gruppe bestehend aus der Neigung, der Wölbung, der Raumlage gewählten geometrischen Größen in Bezug auf mindestens eine Bezugsfläche (P, Ci) kennzeichnen.

## Claims

1. Process for measuring at least one geometric magnitude of an optically reflective surface to be measured (S), during which one observes with the help of a camera (2) the image of said surface to be measured (S), this process comprising at least one measuring phase preceded by at least one calibration phase, said calibration phase being accomplished in such a way as to permit interpretation of the image of said surface to be measured (S) viewed by said camera (2) at the time of said measuring phase and thereby to transform this image into quantitative values characterizing, for a multitude of points forming said optically reflective surface to be measured (S), at least one of the geometric magnitudes selected in the group comprising at least the slope, the curvature, the position in space, for each of these points, process according to which, to make said calibration phase, one defines a measuring space (1) which one associates a spatial reference (O, X, Y, Z), one disposes in the said measuring space (1) at least one optically reflective reference surface (P, Ci), one disposes said camera (2) in such a way that its field of view (3) covers said measuring space (1) and sees said reference surface (P, Ci), one associates to said image viewed by said camera (2) a plane reference mark (O', X', Y'), one disposes a test image (6, 10) associated to a plane reference mark (O", X", Y") and comprising reference points (M"i), in such a way that said reference points (M"i) reflect on said surface (P, Ci) at points (Mi), one observes with said camera (2) the viewed points (M'i) image of said reference points (M"i) after reflection on said surface (P, Ci) at said points (Mi) and ones establishes a single correspondence between said viewed points (M'i), **characterized in that** said calibration phase comprises a step for calibration of the plane during which one establishes a single correspondence between the coordinates (x', y') of said viewed points (M'i) and the coordinates (x, y) of said points (Mi) whose coordinate along the axis Z is known, and, **in that** said calibration phase comprises a step of calibration in slope for which one disposes said image test (10) essentially in parallel to said measuring space (1) and said camera (2) in such a way that its optical center be disposed essentially in the vicinity of said test image (10), **in that** one uses as reference surface at least one reference plane (P) consisting of a mirror (12) essentially parallel to said test image (10) and of known coordinate zi along the axis Z, **in that** one observes with said camera (2) said viewed points (M'i) image of said reference points (M"i) of said test image (10) after reflection on said reference surface (P) at said points (Mi) and **in that** one establishes said single correspondence between the coordinates (x', y') of said viewed points (M'i) and the coordinates (x, y) of said points (Mi) whose coordinate along the axis Z is known.

2. Process according to claim 1, **characterized in that** one displaces said mirror (12) forming said reference plane (P) parallel to itself at different coordinates zi of said measuring space (1) and **in that** one repeats the observation of said viewed image with said camera (2) and establishment of said single correspondence.

3. Process according to any of claim 1 or 2, **characterized in that**, to measure a slope of said surface at a multitude of points, one places said optically reflective surface to be measured (S) in said measuring space (1), one observes with said camera (2) said viewed points (M'i) image of said reference points (M"i) of said test image (10) after reflection on said surface to be measured (S) at said points (Mi) and one deduces the coordinates (xi, yi, zi,) at said points (Mi) as a function of said laws of single correspondence resulting of said calibration phase and the slopes (Pix, Piy) respectively along the axis X and Y at points (Mi)

4. Process according to claim 1, **characterized in that** said test image (10) comprises a coding for intensities (Iix, Iiy) and/or for colors that varies from one point to another of its surface, these variations being defined by known functions respectively along said axis X" and Y" of said test image (10), **in that** one observes with said camera (2) said viewed points (M'i) image of said reference points (M"i) after reflection on said mirror (12) at points (Mi) and **in that** one establishes the single correspondences between on one hand intensities measured (I'ix, I'iy) and/or colors measured or their variations at said viewed points (M'i), said coordinate zi of said reference plane (P) and on the other hand the coordinate xi, yi of said point (Mi).

5. Process according to claim 1, **characterized in that** said calibration phase comprises a step for calibration of curvature for which one disposes said camera (2) in such a way that its field of view (3) being oblique with respect to said reference surface (Ci), one disposes said test image (6) so that it is situated opposite said camera (2) with respect to said surface reference (Ci) and one focuses said camera (2) essentially on said reference surface (Ci) and during which one uses as reference surface at least one standard curvature (Ci) having at least one known curvature 1/Ri along axis X, Y, one observes with said camera (2) said viewed points (M'i) image of said reference points (M"i) of said test image (6) after reflection on said standard curvature (Ci) at points (Mi) and one establishes a single correspondence between the measured values or their variations at said viewed points (M'i) and said curvature 1/Ri of said standard curvature (Ci).

6. Process according to claim 5, **characterized in that** said test image (6) comprises a coding for intensity (Ii) and/or for colors that varies from one point to another of its surface, this variation being defined by a known function along at least one axis X", Y" of said test image (6), **in that** one observes with said camera (2) said viewed points (M'i) image of said reference points (M"i) of said test image (6) after reflection on said standard curvature (Ci) at points (Mi), and **in that** one establishes a single correspondence between the variation in intensity (I'i) measured and/or in color measured or their variation at said viewed points (M'i) and said curvature 1/Ri of said standard curvature (Ci).

7. Process according to claim 5, **characterized in that** one displaces said standard curvature (Ci) forming said reference surface in different positions of said measuring space (1) and **in that** one repeats the observation of said image viewed by said camera (2) and establishment of said single correspondence in a number of points (Mi) determined as a function of the desired precision for said single correspondence.

8. Process according to claim 5, **characterized in that** one uses several standard curvatures (Ci) each having a different curvature 1/Ri.

9. Process according to any of claims 5 to 8, **characterized in that**, to measure curvature of said surface at a multitude of points, one places said optically reflective surface to be measured (S) in said measuring space (1), one observes with said camera (2) said viewed points (M'i) image of said reference points (M"i) of said test image (6) after
reflection on said surface to be measured (S) at said points (Mi) and one deduces the curvature 1/Ri at said points (Mi) as a function of the laws of single correspondence resulting from said calibration phase.

10. Measuring device for embodiment of process for measuring at least one geometric magnitude of a multitude of points of an optically reflective surface to be measured (S) according to any of previous claims, **characterized in that** it comprises at least one optically reflective reference surface (P, Ci) and designed to calibrate said device, at least one measuring space (1) in which one places said reference surface to be measured (S), at least one test image (6, 10) positioned to reflect on said reference surface (P, Ci), or on said surface to be measured (S), at least one camera (2) positioned so that its field of view (3) covers said measuring space (1) and sees the image of said test image (6, 10) on said reference surface (P, Ci), or on said surface to be measured (S), and **in that** said camera (2) is associated with a computer system designed to interpret the image of said surface to be measured (S) viewed by said camera (2) and to deduce from it quantitative values for said multitude of points forming said surface to be measured (S), these quantitative values characterizing at least one geometric magnitudes selected in the group comprising at least the slope, the curvature, the position in space, for each of these points as a function of at least one reference surface (P, Ci).
